# EUROPEAN PATENT APPLICATION

(11) **EP 4 723 756 A1**
(43) Date of publication of application: **08.04.2026**
(21) Application number: 25206389.6
(22) Date of filing: 02.10.2025
(51) Int. Cl.: H04W 52/26, H04W 84/12, H04W 28/26, H04W 28/24

(54) **SYSTEMS AND METHODS FOR ACCESS POINT SEMI-STATIC POWER**

(30) Priority: 05.10.2024 IN 202421075462; 17.04.2025 US 202519182294
(71) Applicant: Avago Technologies International Sales Pte. Limited, Singapore 768923 (SG)
(72) Inventor: Verma, Sindhu, Irvine, 92618 (US); Adhikari, Shubhodeep, Irvine, 92618 (US)
(74) Representative: Dilg, Haeusler, Schindelmann Patentanwaltsgesellschaft mbH

(57) **Abstract**

The technical solutions can enable the AP to identify that the AP communicates with a client device according to a quality of service (QoS) of the client device at a first capability mode associated with a first power level of the AP. The AP can determine that the AP is capable of communicating with the client device according to the QoS at a second capability mode associated with a second power level of the AP, the second power level lower than the first power level. The AP can transmit, responsive to the determination, a frame to notify the client device that the AP is to transition from the first capability mode to the second capability mode. The AP can communicate, subsequent to the transmission of the frame, with the client device at the second capability mode.

## Description

### FIELD OF THE DISCLOSURE

This disclosure generally relates to systems and methods for wireless communication between access points and wireless communication devices, including, without limitation communication reducing interference to unintended communication devices.

### BACKGROUND

Access points (APs), such as Wi-Fi routers, can facilitate wireless communication to any number of client wireless communication devices, also referred to as clients, stations or STAs. These clients, stations or STAs can include smartphones, tablets or computers that can be within the wireless communication range of the APs. While transmitting data to STAs, AP devices may consume different amounts of power according to various modes of operation.

### SUMMARY OF THE DISCLOSURE

The technical solutions of the present disclosure are directed to systems and methods for AP semi-static power management. APs often function at their highest capability modes to effectively communicate with the client devices according to the quality of service (QoS) desired by these client devices. Such highest capability modes usually involve operating at the largest available bandwidth, the highest data transmission rates or the largest number of spatial streams (Nss), thereby consuming the maximum amount of power by the AP. However, sometimes the QoS of the client devices can be sufficiently maintained at capability modes that are lower than the highest capability mode of the AP. In such configurations, the AP can conserve energy by operating at the reduced capability mode, without compromising the performance levels desired by the client device.

The technical solutions of this disclosure can take advantage of such energy saving opportunities when the AP determines that the client device is capable of communicating at a reduced capability mode at which the QoS of the client device can still be satisfied. In response to such determinations, the AP can transition from a higher capability mode that is associated with a higher power consumption level to a reduced capability mode associated with a lower power consumption level, in order to save energy while maintaining the desired client device QoS operation. The technical solutions can utilize AP generated frames to signal and synchronize the transitions between the higher and lower operating mode, thereby allowing for seamless operation with client devices of various operating mode capabilities, while also conserving energy.

At least one aspect of the technical solutions is directed to a system. The system can include an access point (AP). The access point can be configured to identify that the AP communicates with a client device according to a quality of service (QoS) of the client device at a first capability mode associated with a first power level of the AP. The access point can be configured to determine that the AP is capable of communicating with the client device according to the QoS at a second capability mode associated with a second power level of the AP, the second power level lower than the first power level. The access point can be configured to transmit, responsive to the determination, a frame to notify the client device that the AP is to transition from the first capability mode to the second capability mode. The access point can be configured to communicate, subsequent to the transmission of the frame, with the client device at the second capability mode.

The access point can be configured to determine that the AP is capable of communicating with the client device according to the QoS at a plurality of capability modes comprising the second capability mode. Each capability level of the plurality of capability levels can be associated with a respective power level of a plurality of power levels. Each of the plurality of power levels can be lower than the first power level. The access point can be configured to identify an amount of network traffic for a plurality of client devices associated with the AP. The plurality of client devices can include the client device. The access point can be configured to select, based on network traffic status, from the plurality of capability modes, the second capability mode.

The access point can include the one or more processors to determine that the client device is configured to operate at the first capability mode at an Ultra-High Reliability (UHR) level of performance and at the second capability mode at a pre-UHR level of performance. The one or more processors can be configured to determine that the pre-UHR level of performance is sufficient to satisfy the QoS. The one or more processors can be configured to transmit, responsive to determining that the pre-UHR level of performance is sufficient to satisfy the QoS, the frame to notify the client device that the AP is to transition from the second capability mode at the UHR level of performance to the first capability mode at the pre-UHR level of performance. The access point can be configured to determine that the AP is capable of communicating with the client device according to the QoS at the second capability mode in response to a number of client devices associated with the AP and an amount of network traffic associated with the client devices comprising the client device. The access point can be configured to select the second capability mode from a plurality of capability modes, based on the number of client device and the amount of network traffic.

The access point can be configured to receive, from the client device, an indication that the QoS can be satisfied at the second capability mode responsive to a status of the AP to save energy. The access point can be configured to transmit the frame responsive to the indication. The access point can be configured to generate the frame to indicate to the client device a time duration for which the AP is to communicate at the second capability level. The access point can be configured to transmit, responsive to a determination that the AP is not capable of communicating with the client device according to the QoS at the second capability mode, a second frame to notify the client device that the AP is to transition from the second capability mode to the first capability mode. The access point can be configured to communicate, subsequent to the transmission of the second frame, with the client device at the first capability mode.

The access point can be configured to determine that the AP is to transition from the second capability mode to the first capability mode. The access point can be configured to generate, responsive to the determination that the AP is to transition from the second capability mode to the first capability mode, a second frame to notify the client device of a transition delay during which the AP will be unavailable. The access point can be configured to transmit the second frame to notify the client device that the AP is to be available for communication at the first capability mode following the transition delay.

The first capability mode is associated with at least one of a first data transmission rate that can be higher than a second data transmission rate of the second capability mode, first channel width that can be wider than a second channel width of the second capability mode, or a first number of spatial streams that can be larger than a second number of spatial streams of the second capability mode.

The access point can be configured to monitor data transmission rate and latency sensitivity of the client device while operating in the second capability mode. The access point can be configured to transition the AP from the second capability mode to the first capability mode responsive to at least one of the data transmission rate exceeding a data transmission rate threshold for the second capability or the latency exceeding a latency threshold for the second capability.

The access point can be configured to perform Dynamic Frequency Selection (DFS) detection prior to transmitting the frame. The access point can be configured to transmit the frame to notify the client device, responsive to the DFS detection. The access point can be configured to broadcast to a plurality of client devices that include the client device, one or more parameters for a plurality of capability modes that include the first capability mode and the second capability mode. The one or more parameters can correspond to at least one of a data transmission rate, a bandwidth or a number of spatial streams for each capability mode of the plurality of capability modes.

The access point can be configured to transmit the frame to indicate to the client device a time duration for which the AP is to communicate at the second capability mode. The access point can be configured to identify at least one of updated traffic conditions at the client device or updated QoS of the client device. The access point can be configured to adjust the time duration based on at least one of the updated traffic conditions or the updated QoS. The access point can be configured to determine that the AP is capable of communicating with the client device according to the QoS at the second capability mode for a time duration that corresponds to a period of low network traffic. The access point can be configured to generate a frame to notify the client device that the AP is to transition from the first capability mode to the second capability mode for the time duration.

An aspect of the technical solutions is directed to a method. The method can include identifying, by one or more processors, that an access point (AP) communicates with a client device according to a quality of service (QoS) of the client device at a first capability mode associated with a first power level of the AP. The method can include determining, by the one or more processors, that the AP is capable of communicating with the client device according to the QoS at a second capability mode associated with a second power level of the AP, the second power level lower than the first power level. The method can include transmitting, by the one or more processors responsive to the determination, a frame to notify the client device that the AP is to transition from the first capability mode to the second capability mode. The method can include communicating, by the one or more processors subsequent to the transmission of the frame, with the client device at the second capability mode.

The method can include the one or more processor determining that the AP is capable of communicating with the client device according to the QoS at a plurality of capability modes comprising the second capability mode. Each capability level of the plurality of capability levels can be associated with a respective power level of a plurality of power levels. Each of the plurality of power levels can be lower than the first power level. The method can include identifying, by the one or more processors, an amount of network traffic for a plurality of client devices associated with the AP, the plurality of client devices comprising the client device. The method can include selecting, by the one or more processors based on network traffic status, from the plurality of capability modes, the second capability mode.

The method can include the one or more processors determining that the AP is capable of communicating with the client device according to the QoS at the second capability mode in response to a number of client devices associated with the AP and an amount of network traffic associated with the client devices comprising the client device. The method can include selecting, by the one or more processors, the second capability mode from a plurality of capability modes, based on the number of client device and the amount of network traffic.

The method can include the one or more processors determining that the client device is configured to operate at the first capability mode at an Ultra-High Reliability (UHR) level of performance and at the second capability mode at a pre-UHR level of performance. The method can include determining, by the one or more processors, that the pre-UHR level of performance is sufficient to satisfy the QoS. The method can include transmitting, by the one or more processors, responsive to determining that the pre-UHR level of performance is sufficient to satisfy the QoS, the frame to notify the client device that the AP is to transition from the second capability mode at the UHR level of performance to the first capability mode at the pre-UHR level of performance.

The method can include the one or more processors generating the frame comprising an indication to specify the scheduled duration of time for which the AP is to communicate at the second capability level. The method can include transmitting, by the one or more processors, responsive to a determination that the AP is not capable of communicating with the client device according to the QoS at the second capability mode, a second frame to notify the client device that the AP is to transition from the second capability mode to the first capability mode. The method can include communicating, by the one or more processors, subsequent to the transmission of the second frame, with the client device at the first capability mode.

An aspect of the technical solutions is directed to a non-transitory computer-readable medium storing instructions. The instructions, when executed by at least one processor of an access point (AP), can cause the at least one processor to identify that the AP communicates with a client device according to a quality of service (QoS) of the client device at a first capability mode associated with a first power level of the AP. The instructions, when executed by at least one processor of an access point (AP), can cause the at least one processor to determine that the AP is capable of communicating with the client device according to the QoS at a second capability mode associated with a second power level of the AP. The second power level can be, or include a level of power consumption that is lower than the first power level. The instructions, when executed by at least one processor of an access point (AP), can cause the at least one processor to transmit, responsive to the determination, a frame to notify the client device that the AP is to transition from the first capability mode to the second capability mode. The instructions, when executed by at least one processor of an access point (AP), can cause the at least one processor to communicate, subsequent to the transmission of the frame, with the client device at the second capability mode.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGs. 1B and 1C are block diagrams depicting computing devices useful in connection with the methods and systems described herein, according to some embodiments.
FIG. 2 illustrates an example system of access point semi-static power, according to some embodiments.
FIG. 3 is an example flow diagram of a method for access point semi-static power.

The details of various embodiments of the methods and systems are set forth in the accompanying drawings and the description below.

### DETAILED DESCRIPTION

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} draft version D3.0 standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes Access Point Semi-Static Power.

### A. Computing and Network Environment

Prior to discussing specific embodiments of the present solution, it can be helpful to describe aspects of the operating environment as well as associated system components (e.g., hardware elements) in connection with the methods and systems described herein.

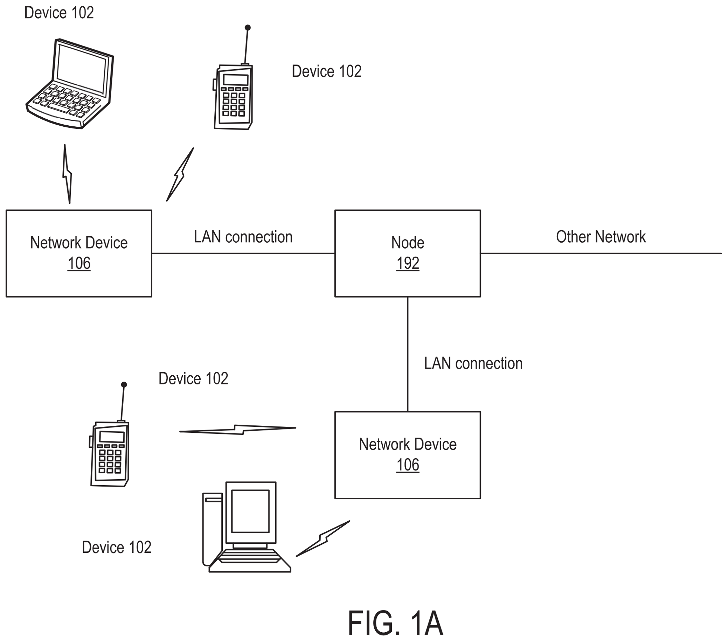

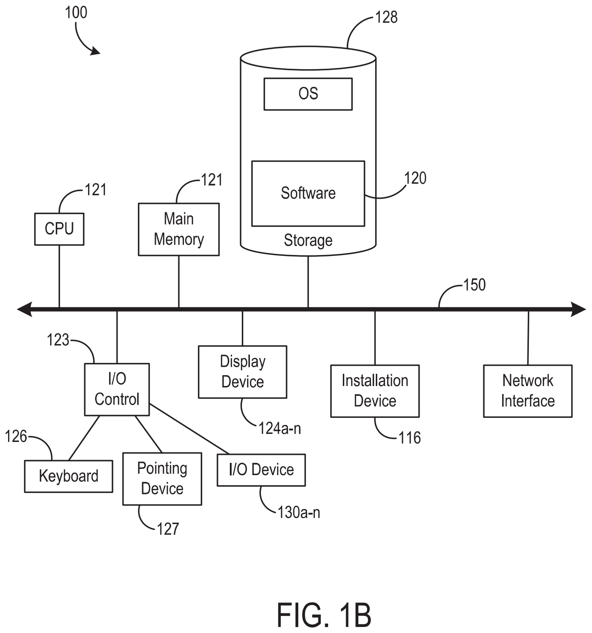

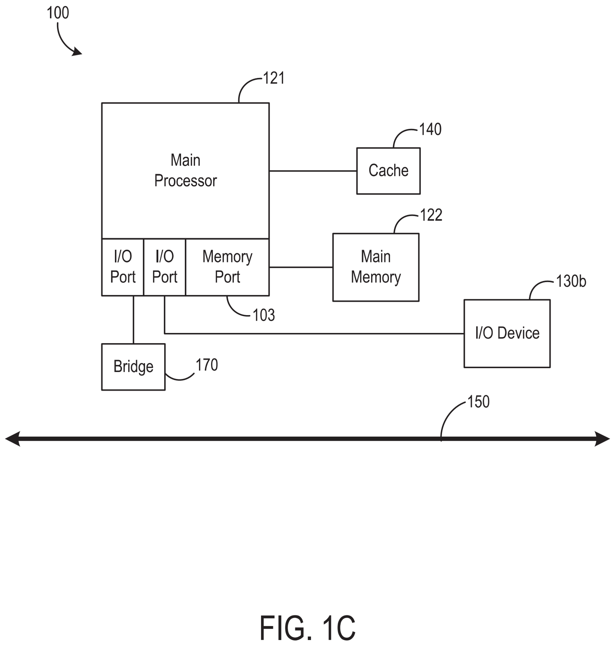

Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (Wi-Fi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., inhome, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes one or more processors 121 (e.g., central processing unit), and one or more main memory units 122. As shown in FIG. 1B, a computing device 100 can include a storage device 128, an installation device 116, a network interface 118, and I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a Microchannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMAX and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Systems and Methods for Access Point Semi-Static Power

The technical solutions described herein can allow an access point (AP) device to implement semi-static power saving by transitioning from a higher capability mode of operation to a lower capability mode based on the network traffic conditions and the non AP device capabilities. Depending on conditions, APs and client devices can communicate with each other in various capability modes. These capability modes can involve different operational settings or states of the AP and the client devices, each associated with their own level of communication capabilities (e.g., particular bandwidth, transmission rates and spatial streams). Each of these capability modes are also associated with their own particular level of power that the devices consume during such operation. These capability modes, allowing for different qualities and levels of communication, can be selected based on the capabilities of the non AP devices (e.g., client devices), such as the client device bandwidth or transmission rates.

The technical solutions of this disclosure allow the AP device to reconfigure its operation from a higher capability mode to a lower capability mode, responsive to determining that the lower capability mode is both available to the client device and sufficient to satisfy the quality of service (QoS) of the client device. For instance, an AP device maintain communication with a client device at a capability mode that utilizes the level of the capabilities (e.g., the bandwidth, transmission rates and spatial streams) exceeding those that are sufficient to satisfy the QoS of the client device. The AP can determine that the client device is capable of communicating at one or more lower capability modes that are also sufficient to satisfy the QoS performance of the client device. Each of these lower capability modes can be associated with their own corresponding power levels (e.g., reduced energy consumption levels) that may be desirable to the AP to save energy. In response to determining that these reduced capability modes are available to the client device and can satisfy the QoS of the client device, the AP can select, from the one or more lower capability modes, a lowest capability mode (e.g., corresponding to the lowest amount of power consumption) that is sufficient to satisfy the QoS thresholds of the client device. In this manner, the AP can perform the communication with the client device at the lower power level without reducing performance.

The technical solutions can allow for the AP to coordinate the transition between the capability modes using frames that indicate to the client devices the changes in the modes of operation as well as any scheduled time durations for such capability mode operation. For instance, when operating in a higher capability mode and upon determining that a lower capability mode is both available to the client device and sufficient to satisfy the QoS of the client device, the AP can transmit a frame indicating a change to a reduced capability mode operation. The frame can include an indication of a time duration for which the AP is scheduled to operate at the reduced capability mode. The frame can also indicate the timing at which the transition is to occur. While in the reduced capability mode, the AP can conserve energy by operating at the power level of the reduced capability mode, while maintaining communication with the client device at the desired QoS. Upon determining that an increased or a higher capability mode is desired to increase the performance of the communication, the AP can send another frame indicating to the client device the transition to a higher capability mode.

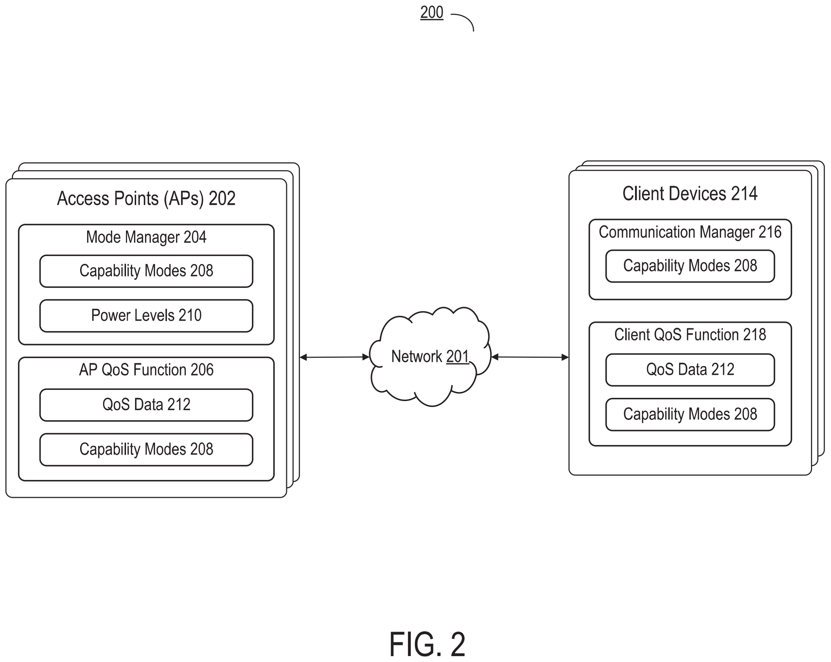

FIG. 2 illustrates an example system 202 for AP semi-static power. Example system 200 can include one or more APs 202 communicatively couple to one or more client devices 214 via one or more networks 201. One or more components of the system 200 can communicate via the network 201. Any of the systems described in connection with FIGs. 1A-1C can be configured constructed, or implemented to operate and/or use any of the options and techniques described in FIG. 2.

The AP 202 can include, operate, or execute at least one mode manager 204 and at least one AP quality of service (QoS) function 206. The mode manager 204 can include, execute, utilize, or operate, one or more capability modes 208 (e.g., a high-performance mode for peak traffic periods, a medium-performance mode for regular traffic, and a low-power mode for off-peak hours). These capability modes 208 can correspond to, or be associated with one or more power levels 210 (e.g., a high power level for maximum performance, a medium power level for balanced performance and energy efficiency, and a low power level for energy-saving operations). For instance, a low capability mode may involve the AP operating with reduced receive and transmission (Rx/Tx) capabilities, such as receiving only non-HT duplicate PPDUs in a 20MHz bandwidth with a single spatial stream (1 NSS) at mandatory non-high throughput (non-HT) rates (e.g., at 6, 12, or 24 Mbps). For example, an intermediate capability mode can be defined based on the AP operating at increased Rx/Tx capabilities, such as receiving and transmitting in a 40MHz bandwidth with two spatial streams (2 NSS) at higher data rates (e.g., 54, 108, or 216 Mbps). For example, a high or higher capability mode can have the AP operating in an 80MHz bandwidth with four spatial streams (4 NSS) at very high throughput (VHT) rates (e.g., 600, 1200, or 2400 Mbps). These modes can each have their own corresponding power levels 210 (e.g., corresponding amount of power consumption) while maintaining the operation level at that capability mode 208.

The AP QoS function 206 can include, execute, utilize or operate one or more of QoS data 212 associated with capability modes 208. The QoS data 212 can include metrics, data, information, parameters, associated with the QoS of the AP 202. The QoS can refer to the overall performance of a network or service, including in terms of its ability to provide reliable and efficient data transmission, prioritizing traffic to meet specific performance requirements for given applications or users. The QoS can include the ability of an AP to maintain reliable and efficient data transmission by dynamically adjusting its operational state to meet specific performance requirements for different applications and users.

Across the network 201, a client device 214 can include or execute one or more of communication managers 216 and client QoS functions 218. A communication manager 216 can include, execute, operate or utilize one or more capability modes 208 (e.g., frequency bands, channel width, Wi-Fi standards). A client QoS function 218 can include, execute, utilize or operate QoS data 212 associated with capability modes 208. The QoS data 212 can include metrics, data, information, parameters, associated with the QoS of the client device 214.

FIG. 2 is an example block diagram of a system 200 for AP semi-static power. Example system 200 can include one or more APs 202 communicatively couple to one or more client devices 214 via one or more networks 201. One or more components of the system 200 can communicate via the network 201. Any of the systems described in connection with FIGs. 1A-1C can be configured constructed, or implemented to operate and/or use any of the options and techniques described in FIG. 2.

The AP 202 can include any device, apparatus, system, or combination of hardware and software configured to allow wireless communication devices to connect to a wired network using Wi-Fi or other standards. The AP 202 can sometimes be referred to as a wireless access point (WAP). The AP 202 can include components, such as an antenna or transceivers for transmitting and receiving wireless signals, a radio device for managing wireless communications, a CPU for processing data and control operations, and memory (DDR) for storing operational data and configurations. The AP 202 can be implemented (e.g., configured, designed, and/or built) for operating in a wireless local area network (WLAN). The AP 202 can connect to a router (e.g., via a wired network) as a standalone device in some embodiments. The AP 202 can be a component of a router. The AP 202 can provide multiple devices with access to a network. The AP 202 can, for example, connect to a wired Ethernet connection and provide wireless connections using radio frequency links for other devices to utilize that wired connection. The AP 202 can be implemented to support a standard for sending and receiving data using one or more radio frequencies. Those standards, and the frequencies they use, can be defined by the IEEE (e.g., IEEE 802.11 standards). The AP 202 can be configured and/or used to support Internet hotspots, and/or on a network to extend the network's Wi-Fi signal range.

The client device 214 can be a wireless communication device configured for wireless communication in wireless communication networks, such as a local area network (LAN), wide area network (WAN), or cellular network. The client device 214 can be configured to communicate wirelessly with network devices using any of the IEEE 802.11 standards or other relevant wireless communication protocols. The client device 214 can be any of the user devices described in connection with FIGS. 1A-1C. The client device 214 can be any of a broad range of devices, such as smartphones, tablets, laptops, desktop computers, set-top boxes, AR/VR sets, gaming consoles, IoT devices, and other equipment. In some embodiments, the client device 214 can establish a wired connection to the network 201 or other network infrastructure using either Ethernet or coaxial cables, depending on the network technology being used. The client device 214 can support multiple network interfaces concurrently, allowing it to connect to different networks using different technologies (e.g., Wi-Fi and Ethernet simultaneously).

The network 201 can include any type or form of network. The network 201 can be any form of computer network that can relay information among the APs 202 and the client devices 214. The network 201, for example, similar to the network device 106 described in connection with FIG. 1A, can include computer networks such as the internet, local, wide, metro, or other area networks, intranets, satellite networks, other computer networks such as voice or data mobile phone communication networks, and combinations thereof.

The mode manager 204 can include any combination of hardware and software for managing (e.g., establishing, switching, selecting or operating between) various capability modes 208 of the AP 202. The mode manager 204 of the AP 202 can be any system, device, software, application, virtual machine, counter, or set of instructions executable on a physical or virtual device configured to manage, establish, or otherwise modify the capability modes 208 and power levels 210. The mode manager 204 can include one or more processors coupled with memory that include hardware and software for managing, establishing, and detecting capability modes 208 and power levels 210. The mode manager 204 can be configured to perform the functions, processes, and steps described herein. The mode manager 204 can initiate and manage communications with the client device 214 or client devices 214. In some instances, the mode manager 204 can include one or more wireless or hardwired links to initiate the communication with the client device 214. The mode manager 204 can generate, create, or otherwise determine signals to transition from a first capability mode 208 to a second capability mode 208. The mode manager 204 can manage, detect, or otherwise indicate a power level 210 of the AP 202.

The mode manager 204 can detect or identify that the AP 202 communicates with one or more of the client devices 214 according to a QoS at a capability mode 208 that is associated with a particular (e.g., first of a plurality) of power levels 210. Responsive to this detection or identification, the mode manager 204 can determine that the AP 205 is capable of communicating with such one or more client devices 212 according to the same QoS at a different (e.g., a second) capability mode 210 that is associated with (e.g., operates using or consumes) a second power level of the AP 202 that is lower than the particular (e.g., the first) power level at which the AP 202 currently operates. In doing so, mode manager 204 can identify an opportunity to conserve energy while satisfying the performance level of the QoS for the given one or more client devices 212.

The mode manager 204 can determine the operating power level of the AP 202 based on the QoS requirements of the client devices 214 or the type of client devices 214. For instance, the mode manager 204 can determine if the one or more client devices 214 are configured as pre-Ultra-High Reliability (pre-UHR) or as Ultra-High Reliability (UHR) client devices 214. The pre-UHR client devices 214 can be client devices 214 configured to operate at capability levels of Wi-Fi client devices operating prior to the introduction of the UHR capabilities. For instance, pre-UHR client devices 214 can operate at modulation and coding scheme (MCS) levels that are below a particular threshold level of MCS (e.g., MCS 7), or up to a bandwidth level that is below a threshold bandwidth level (e.g., bandwidths up to 80 MHz) or utilizing a number of spatial streams that is below a threshold level of spatial streams (e.g., up to 4 spatial streams). The UHR client devices 214 can be client devices configured to operate at operation levels above those of the pre-UHR devices (e.g., consistent with those provided following the introduction of the UHR), such as MCS levels of up to MCS 11, with bandwidths up to 160 MHz, and utilizing up to 8 spatial streams. The mode manager 204 can dynamically adjust the capability modes 208 and power levels 210 of the AP 202 based on the mode capabilities 208 of the client devices 214 to identify and take advantage of opportunities to conserve energy while providing the predetermined level of performance (e.g., satisfy the QoS). This approach can allow for backward compatibility by allowing the AP 202 to operate at lower power levels and capability modes that are compatible with pre-UHR clients, thus maintaining communication with without compromising performance. The mode manager 204 can identify the type of client device 214 (UHR or pre-UHR) and select the appropriate capability modes 208 and power levels 210 based on the client's capability levels. For instance, if the client device 214 is a UHR device that is capable of operating at higher as well as lower MCS levels while still satisfying the QoS, the mode manager 204 can operate the AP 202 at a reduced power level to match the client's capabilities while still meeting the QoS requirements. Conversely, when QoS demands a higher performance level, the mode manager 204 can operate the AP 202 at a higher power level to provide the necessary bandwidth, MCS, and Nss. This dynamic adjustment of the capability modes 208 and power levels 210 can ensure that the AP 202 can efficiently manage its power consumption while maintaining the desired QoS for all connected client devices.

The mode manager 204 can be executed using one or more processors configured to operate with or utilize one or more transceivers of the AP 202 to transmit frames to the client devices 214 to configure, facilitate or coordinate transitions between different capability modes 208. For instance, responsive to determining that the AP 202 and the client device 214 can maintain operation according to a desired QoS at a capability mode 208 at a reduced power level 210, the mode manager 204 can transmit a frame to notify the client device 214 that the AP 202 is to transition from current capability mode 208 to another capability mode 208 of a lesser power level 210. The mode manager 204 can indicate in the frame that the AP 202 is to operate at the new capability mode 208 for at least a scheduled duration of time (e.g., a predetermined time duration).

Capability mode 208 can be any operational state of an AP 202 that corresponds to a certain level of communication capabilities (e.g., bandwidth, speed, or spatial streams) corresponding to that capability mode and is associated with a corresponding power 210 of that mode. A capability mode 208 can include a setting or configuration of an AP 202 at which the AP can operate (e.g., transmit and receive network packets). A capability mode 208 can include configurations or operation settings associated with particular bandwidth, transmission speed and power consumption levels. The capability modes 208 can be levels, stages that indicate a state of the AP 202. The capability modes 208 can indicate or correspond to settings, configurations, features, or operations for the AP 202 to communicate with the client device 214. The capability mode 208 can include or correspond to data rates, data modulation, channel width, frequency bands, spatial streams, power save modes, security protocols, QoS, among other aspects of the AP 202. The mode manager 204 can adjust the capability modes 208 according to the network traffic detected at the AP 202. In some instances, the capability mode 208 can include a time to switch to a different capability mode 208. The time can depend on the network traffic, QoS, or the capabilities of the AP 202.

The power level 210 can be any level of power consumption or any type or form of power consumption rate at which at least one AP 202 can consume power or energy while operating at a particular capability mode 208. For example, the power level 210 can indicate or refer to a power used by the AP 202 to transmit signals, data packets, or other communication signals to one or more client devices 214. The power level 210 can correspond to or be represented as decibels relative to milliwatt (dBm) or milliwatts (mW). For example, an AP 202 can include a power level 210 in various levels corresponding to dBm values, such as, level 1 as 20 dBm, level 2 as 17 dBm, level 3 as 15 dBm, and so on. In another example, an AP 202 can include a first power level 210 (100-1000 mW), a second power level 210 (e.g., 10-100 mW), and a third power level (1-10 mW). In some instances, the power level 210 can be automatically adjusted by the AP 202 (e.g., mode manager 204) or manually set by a network administrator.

The AP QoS function 206 can be a function, an algorithm, a method, a technique, or process implemented by one or more processors coupled with memory to manage, detect, or otherwise identify network traffic associated with the AP 202 utilizing the QoS data 212 and the capability modes 208. The AP QoS functions 206 can be implemented using one or more algorithms to allow the AP 202 to receive resources (e.g., power) in accordance with the communication with the client device 214. The QoS algorithms can include differentiated services, weighted fair queuing (WFQ), priority queuing (PQ), token bucket algorithm, leaky bucket algorithm, random early detection, resource reservation protocol, among other algorithms. The AP QoS functions 206 can indicate or refer to the performance or the reliability of the network associated with the AP 202 206. In this manner, the AP QoS function 206 can indicate traffic classification, traffic prioritization, bandwidth management, latency and jitter, packet loss, resources, among other data. The AP QoS function 206 can indicate QoS data 212 and the capability modes 208.

The QoS data 212 can be information, metrics, or data to measure, identify, indicate, or optimize the QoS within the network associated with the AP 202. The QOS data 212 can include one or more parameters, such as, traffic queues, arbitration inter-frame space, contention windows, and transmission opportunities to manage and prioritize network traffic. The AP 202 can use the QoS data 212 to allocate, distribute, or otherwise manage resources associated with the network or system 100. Similar to the AP QoS function 206, the QoS data 212 can indicate bandwidth, latency, jitter, packet loss, throughput, error rates, among other data to support the mode manager 104 with resource allocation, performance monitoring, traffic prioritization, among other functions.

The communication manager 216 of the client device 214 can include one or more processors coupled with memory to request, establish, or initiate communication with the AP 202. The communication manager 216 can include a wireless network interface card, antennas (e.g., global positing system, directional, high-gain), drivers, storage, among other components to connect with the AP 202. The communication manager 216 can connect to the wireless or wired network using the above mentioned components. For example, the Communication manager 216 can adjust one or more internal antennas to transmit and receive wireless signals from the AP 202. The communication manager 216 can include capability modes 208 similar to the AP 202.

The client QoS data 212 can differ from the AP QoS data 212. In some instances, the client QoS data 212 can be similar to the AP QoS data 212. The client QoS function 218 can be a function, an algorithm, a method, a technique, or process implemented by one or more processors coupled with memory to manage, initiate, or otherwise identify network traffic associated with the network of the AP 202 utilizing the QoS data 212 and corresponding capability modes 208. The client QoS functions 218 can be implemented using one or more algorithms to allow the client devise 214 to conserve power, adapting to network conditions, and detecting outgoing network traffic. The QoS algorithms can include Wi-Fi multimedia, rate limiting algorithms, token bucket algorithm, leaky bucket algorithm, adaptive QoS algorithms, power save algorithms, among other algorithms. The client QoS functions 206 can indicate or refer to the network traffic associated with the AP 202 by implementing the QoS algorithms.

In further detail, the mode manager 204 can identify, determine, or otherwise indicate that the AP 202 communicates with a client device 214. Prior to the communication, the mode manager 204 can generate a signal (e.g., beacon frame, power save enable notification frame) that is broadcast to available client devices 214 within range of the AP 202. The communication manger 216 can listen, detect, or otherwise identify the signal broadcast by the AP 202. The signal can include information or data associated with the AP 202 or the network. The information can include service set identifier (SSID), data rates, security protocols among other data associated with the AP 202. In some instances, the communication manager 216 can transmit one or more requests to the AP 202 on one or more channels of the network. Upon reception of the one or more requests, the mode manager 204 can transmit a response to the each of the one or more requests to provide the network information described above.

The mode manager 204 can verify, authenticate, or otherwise authorize the client device 214 via at least one authentication method including open system authentication, shared key authentication, Wi-Fi protected access authentication, Wi-Fi protected access version 1 authentication, Wi-Fi protected access version 2 authentication, Wi-Fi protected access version 3 authentication. In some instances, the AP 202 can initiate a four way handshake with the client device 214 using one or more of the authentication methods. The communication manager 216 can associate with the AP 202 by transmitting one or more association frames to the AP 202. The communication manager 216 can extract the QoS data 212 from the client QoS function 218 and embed the QoS data 212 within the one or more association frames. For example, the client device 214 can capture the QoS data 212 associated with the capability at the client device 214. The communication manager 216 can embed the QoS data 212 within one or more association frames to indicate bandwidth latency of the network. Upon inclusion of the QoS data 212, the communication manager 216 can transmit the association frames to the AP 202.

The mode manager 204 can identify, determine, or otherwise indicate that the AP 202 communicates with the client device 214 according to the QoS data 212 of the client device 214. By using the QoS data 212, the systems and methods described herein can prioritize network traffic between the APs 202 and the client devices 214. The QoS data 212 can indicate the network traffic and, in some instances, a priority level for the communication. The mode manager 216 can label, mark, or otherwise classify packets from the client device 214 with appropriate QoS tags for the AP 202. The tags can be at least one of differentiated service code point (DSCP), 802.1p priority tagging, class of service, traffic class, resource reservation protocol (RSVO), MPLS EXP, among other forms of QoS tags. The mode manager 204 can use the QoS data 212 to transmit packets to the client device 214 by using, for example, enhanced distributed channel access. In some instances, the mode manager 20 can use the AP QoS function 206 to employ, apply, or execute bandwidth management (e.g., rate limiting, traffic shaping) to allow the client devices 214 at a higher priority to obtain an optimal bandwidth to communicate with the AP 202. In some instances, the modem manager 204 can adjust the Ap QoS function 206 (e.g., QoS settings, QoS configurations) according to the network condition and the client capabilities. In this manner, the AP 202 can provide client devices 214 with necessary resources while reducing latency and improving performance of the system 200.

In further detail, the AP 202 can communicate with the client device 214 at one or more capability modes 208 associated with a respective power level 210 of the AP 202. Each capability mode 208 can be associated with at least one of a respective data transmission rate, a channel width, or spatial streams of the AP 202. For example, a first capability mode 208 can include a data transmission rate that is higher than a data transmission rate of a second capability mode 208. In another example, a first capability mode 208 can include a first channel width of the AP 202 that is wider than a second channel width of a second capability mode 208. In another example, a first capability mode 208 can include a number of spatial streams that is larger than a number of spatial streams of the second capability mode 208.

The AP 202 can include a plurality of power levels 210 to transition between according to the capability mode 208. Each of the power levels 210 can vary in an amount of energy consumption at the AP 202. For example, a first capability mode 208 can correspond to a first power level 210 that has a higher energy consumption. The AP 202 can transmit frames to notify client devices 214 of the changes to various capability modes 208. For instance, when transitioning to a first power level 210 (e.g., from lower to a higher power level mode), the AP 202 can transmit a power save disable notification (PSDN) frame to the client device 214 to notify the client device of the transition. The PSDN frame can indicate a transition delay during which the AP may be unable to communicate with the client device 214, informing the client devices 214 that the AP will be available to resume communication following the transition delay.

In another example, a second capability mode 208 can correspond to a second power level 210 that has a lower energy consumption. When transitioning to a second power level 210 (e.g., from higher to lower power level mode), the AP 202 can transmit a power save enable notification (PSEN) to the client device 214. The PSEN frame can include data informing the client devices 214 of operation at reduced capability for at least a scheduled duration of time. The scheduled duration of time can be any time duration, such as 100 milliseconds or one or more seconds. Each of the capability modes 208 can correspond to at least one of a PHY format, a data rate, bandwidth, NSS, among other factors indicating the frames that the AP 202 can receive or transmit in the respective power level 210.

In some instances, the PSEN frame can include information or data associated with a respective capability mode 208 (e.g., lower capability mode 208). For example, the information can include an identifier of the AP 202 having the power level 210 indicating the power save state. The information can further include a power management bit, a transition time, a traffic indication map, a delivery traffic indication message, among other aspects within the frame. In some instances, the AP 202 can schedule switches to a different capability mode 208 based on predictions of network traffic, the current network traffic, QoS data 212 associated with the AP 202, or QoS data 212 associated with the client device 214. For example, the PSEN frame can indicate a time t1 for the AP 202 to switch back from the lower capability mode 208 to a higher capability mode 208. The PSEN frame can include a second time (e.g., t2) at which the AP 202 is going to switch to the lower capability mode 208. Upon reception by the client devices 214, the client devices can transmit PPDUs less than or equal to at least one of a format, rate, or bandwidth of the capability mode 208 of the AP 202 during the scheduled time period (e.g., t1) for which the AP is to operate at the reduced capability mode 208.

In some instances, the PSDN frame can include information or data associated with a respective capability mode 208 (e.g., high capability mode 208). For example, the information can include an identifier of the AP 202 having the power level 210 indicating the non-power save state. The information can further include a power management bit, a transition time, a traffic indication map, a delivery traffic indication message, among other aspects within the frame. In some instances, the AP 202 can schedule switches to a different capability mode 208 based on predictions of network traffic, the current network traffic, QoS data 212 associated with the AP 202, or QoS data 212 associated with the client device 214. For example, the PSDN frame can indicate a time t1 for the AP 202 to switch to a lower capability mode 208 and a second time t2 for the AP 202 to switch to a higher capability mode 208. Upon reception by the client devices 214, the client devices can transmit PPDUs less than or equal to at least one of a format, rate, or bandwidth of the capability mode 208 of the AP 202 during the time t1.

In some instances, the AP 202 can broadcast, provide, or otherwise transmit transitions between power levels 210 to each of the client devices 214. In some instances, the AP 202 can broadcast, provide, or otherwise transmit the capability mode 208 to each of the client devices 214. For example, the AP 202 can utilize QoS data 212 from the AP 202 and the QoS data 212 of the client device 214 to determine the capability mode 208 of the AP 202 to account for the UL/DL traffic associated with the system 200. In this manner, the AP 202 can reduce power consumption without sacrificing performance in the communication session with the client device 214.

In some instances, the AP 202 can receive a response from each client device 214 within the system 200, in response to the broadcast of the PSEN frame or the PSDN frame. In some instances, the Ap 202 may not receive a response from each of the client devices 214. If the AP 202 does not receive or is not capable of receiving responses from each client device 214, the AP 202 can transmit the PSEN frame or the PSDN frame within a targeted time based transmission (TBTT) or beacons. The AP 202 can use the QoS data 212 of the client devices 214 to determine specific times to initiate the communication with the client device 214. In this manner, the AP 202 can use the information from the client devices 214 to manage network traffic, reduce collisions, and improve on contention. The client device 214 can remain in a capability mode 208 that corresponds to a higher power level 210. For example, the client device 214 can be a high-power state (e.g., active) until the time to communicate with the AP 202 ends.

The AP QoS function 206 can determine, identify, or otherwise indicate that the AP 202 is capable of communicating with the client device 214. In some instances, the AP QoS function 206 can use QoS data 212 to evaluate a signal strength or signal to noise ratio associated with data transmissions to determine that the AP 202 is capable of communicating with the client device 214. The AP QoS function 206 can determine that the AP 202 is capable of communicating with the client device 214 according to the QoS data 212 at the plurality of capability modes 208. The QoS data 212 can include or indicate a client device capability mode 208 when communicating with the AP 202. The QoS data 212 can include an available transmission power for the client device 214.

Each capability level (e.g., capability mode 208) of the plurality of capability mode can be directly or indirectly associated with a respective power level 210 of a plurality of power levels 210. The plurality of capability modes 208 can include a full power mode, adaptive power mode, low power mode, energy saving mode, client specific mode, among other capability modes 208 of the AP 202. The mode manager 204 can adjust or configure the capability modes 208 for the AP 202. For example, the mode manager 204 can configure an automatic adjustment of the capability modes 208 based on signal strength, interference, client density, network traffic, among other factors. In another example, the mode manager 204 can receive a configuration from an external computing device (e.g., operated by a network administrator) to improve performance in specific areas within range of the AP 202.

The plurality of power levels 210 can indicate the transmission power at the AP 202 can broadcast, provide, or otherwise generate wireless signals for client devices 214. In some instances, the capability modes 208 can indicate a respective power level 210. For example, the full power capability mode 210 can indicate a high power level 210. Each power level 210 can have an impact on a corresponding client device 214 or on the AP 202. For example, a high power level 210 (e.g., 100-1000mW) can extend coverage of the AP 202 and allow connections between distant client devices 214. By utilizing the adjustments to power levels 210, the technical solutions described herein can avoid interference (e.g., reduce power in network with high traffic), improve bandwidth, and improve battery consumption.

The AP 202 can identify, indicate, or otherwise determine an amount of network traffic for the plurality of client devices 214 associated with the AP 202. The network traffic refers to an amount of data, data packets, information, etc., that is transmitted and received over a network at various instances in time. In the communication, the client devices 214 can be accessing the internet, streaming videos, sending text messages, downloading files, access cloud based applications, among other network traffic. The network traffic can include unicast traffic, multicast traffic, broadcast traffic, among other forms of traffic. For example, the AP 202 can establish communication with at least one client device 214 of the plurality of client devices 214 in unicast traffic. In some instances, the plurality of client devices 214 can connect and communication with a first AP 202. As more client devices 214 connect with the AP 202, the network traffic can cause congestion, increased latency, and reduced throughput.

To determine the amount of network traffic, the AP 202 (e.g., mode manager 204) can monitor, determine, or otherwise identify the amount of network traffic by analyzing one or more data packets that are transmitted or received via each client device 214. In this context, the technical solutions described herein utilize QoS data 212 of the AP 202 and QoS data 212 of the client device 214 to prioritize network traffic. However, aspects of the technical solutions described herein can utilize various factors to prioritize network traffic such as bandwidth demand, signal strength, congestion levels, among other factors. In this manner, the technical solutions described herein can allow efficient traffic distribution using the QoS data 212. Based on the one or more data packets, the AP 202 can determine the amount of network traffic. For example, when the Ap 202 monitors one or more data packets that are above a threshold, the AP 202 can determine that the network include a high amount of network traffic. In another example, when the AP 202 monitors one or more data packets that are below the threshold, the AP 202 can determine that the network includes a low amount of network traffic.

The AP 202 (e.g., mode manager 204) can select, determine, or otherwise identify, from the plurality of capability modes 208, the second capability mode 208. The second capability mode 208 can be subsequent to the first capability mode 208. For example, the AP 202 can be in a full power capability mode (e.g., first capability mode 208). From here, the mode manager 204 can cause the AP 202 can transition to an adaptive power capability mode (e.g., second capability mode 208). In some instances, the AP 202 can remain in the same capability mode 208 over a time period.

The mode manager 204 can select, determine, or otherwise identify, the second capability mode 208 based on the network traffic. The mode manager 204 can analyze the QoS data 212 of the AP 202 212 and the QoS data 212 of the AP 202 212 to select the capability mode 208 that best optimizes the traffic within the network. For example, the mode manager 204 can prioritize traffic according to the QoS data 212 by selecting a capability mode 208 that satisfies the function of applications associated with the client device 214. In another example, the network traffic can indicate that there is heavy use of VoIP calls within the network, thereby the mode manager 204 can select the full power capability mode 208 to allow for the VoIP calls to function optimally. The mode manager 204 can determine the optimal function by comparing the performance of the application (e.g., VoIP call) against an optimization threshold.

The AP 202 can identify, indicate, or otherwise determine that the AP 202 is capable of communicating with the client device 214 according to the QoS data 212 at the second capability mode 208. The AP 202 can use the AP QoS function 206 to transmit an indication to the client device 214. The indication can cause the communication manager 216 to trigger the client QoS function 218 to generate a QoS request (e.g., QoS data 212). The QoS request can include the capability modes 208 of the client device and service levels (e.g., power levels 210) for the AP 202 to handle the network traffic associated with applications of the client device 214. The client device 214 can transmit the QoS request to the AP 202. The AP 202 can receive the QoS request from one or more client devices 214 and the use the amount of network traffic to identify that the AP 202 is capable of communicating with the at least one client device 214 according to the QoS data 212 within the QoS request. Upon reception of the QoS request, the mode manager 204 can analyze the QoS request to adjust the configuration of the AP 202. If the AP 202 adjusts its configuration (e.g., bandwidth allocation, traffic prioritization) to meet any QoS requirements within the QoS request.

The AP 202 select, determine, or otherwise identify the second capability mode from a plurality of capability modes, based on the number of client device and the amount of network traffic. The AP 202 can receive a plurality of QoS requests from each client device 214. Each QoS request indicating QoS data 212 for the respective client devices 214. Using the QoS requests, the mode manager 204 can identify the number of client devices 214 associated with the network and the amount of network traffic based on the client devices 214. The mode manager 204 can identify the capability mode 208 (e.g., second capability mode 208) based on the number of client devices 214 and the amount of network traffic. For example, the network can include 3-7 network devices, each of which are to complete at least one task (e.g., application download) indicating an amount of network traffic that is greater than a threshold. The AP 202 can determine that a full power capability mode 208 can communicate with each client device 214.

In some instances, the mode manager 204 can determine, identify, or otherwise indicate that the AP 202 is capable of communicating with the client device 214 at a second or subsequent capability mode 208 associated with a different power level 210. In this manner, the AP 202 can communicate with the client devices 214 at a different capability mode 208 than a previously selected capability mode. The mode manager 204 can select the capability mode 208 and power level 210 that increases performance of the AP 202, reduces energy consumption, and optimally communicates with the client device 214.

The AP 202 can transmit, send, or otherwise provide, responsive to the determination, a frame to notify the client device that the AP 202 is to transition from the first capability mode to the second capability mode. The frame can be a data packet that is represented as a structured or unstructured unit of data. The frame can include a header, a payload, a QoS control and a frame check sequence. The frame can be represented as a management frame, a control frame, a beacon frame, a response frame, or a QoS data frame, among other frames. For example, the AP 202 can transmit a QoS frame from the AP 202 to the client device 214 to synchronize QoS requirements for communication. The frame can notify at least one client device 214 that the AP 202 is to transition from a low power capability mode 208 to a full power capability mode 208.

In some instances, the AP can perform, execute, or otherwise apply Dynamic Frequency Selection (DFS) detection prior to transmitting the frame. The DFS can refer to channel allocation to avoid interference. The DFS can include channel monitoring, radar detection, regulatory compliance, among others. utilizing DFS can provide support for the AP to enable interferencefree communication within the network. In some instances, the DFS can reduce or eliminate interference of environmental factors. From here, the AP 202 can transmit, provide, or otherwise send the frame to notify the client device, responsive to the DFS detection.

The AP 202 can generate, determine, or otherwise identify the frame to indicate to the client device a time duration for which the AP 202 is to communicate at the second capability level. The time duration can be represented in microseconds, nanoseconds, picoseconds, seconds, minutes, hours, among other representations in time. The mode manager 204 can indicate the time duration within the header of the frame (e.g., duration/ID field). By using the time duration within frame, the AP 202 can synchronize communication thereby, reducing the amount collisions of data transmission between the AP 202 and the client devices 214. In some instances, the client device 214 can generate an indication indicating that the QoS is satisfied at the capability mode 208 or unsatisfied at the capability mode 208. upon generation of the indication, the client device 214 can transmit, send, or otherwise provide the indication to the AP 202. The AP 202 can receive, retrieve, or otherwise obtain from the client device, an indication that the QoS is to be satisfied at the second capability mode responsive to a status of the AP 202 to save energy. From here, the AP 202 can transmit, send, or otherwise provide the frame responsive to the indication.

In some cases, the AP 202 can determine, identify, or otherwise indicate that the AP 202 is not capable of communication with the client device 214 according to the QoS (e.g., QoS data 212) at the capability mode 208. The Ap 202 can make the determination by evaluating the number of network devices and the amount of traffic within the network. The AP 202 can transmit, provide or otherwise send, responsive to a determination that the AP 202 is not capable of communicating with the AP 202 according to the QoS at the second capability mode 208, a second frame to notify the client device that the AP 202 is to transition from the second capability mode 208 to the first capability mode 208. The second frame can have a similar format as the first frame, yet indicate that the AP 202 is not capable of communicating at the second capability mode 208. In this manner, the AP 202 can determine that the AP 202 is to transition from the second capability mode to the first capability mode. By reverting back to the previous capability mode (e.g., first capability mode 208), the AP 202 can communicate with the client device 214 at the first capability mode 208 (e.g., at bandwidth and communication rate of the first capability mode).

The AP 202 can generate, create, or otherwise identify, responsive to the determination that the AP 202 is to transition from the second capability mode to the first capability mode, a second frame to notify the client device of a transition delay during which the AP 202 will be unavailable. The second frame can have a similar format to the frames described above. The Ap 202 can send the frames including the transmission delay. The transmission delay can indicate that the AP 202 is unavailable due to the transition from the second capability mode 208 (e.g., reduced capability mode 208, current capability mode) to the first capability mode 208 (e.g., increased capability mode 208, previous capability mode 208). The transition delay can be a predetermined value based on transitions between the capability modes 208. In some instances, the AP 202 can calculate the transition delay according to the QoS data 212 of the AP 202 and the power levels 210 of each capability mode 208. From here, the AP 202 can transmit, send, or otherwise provide the second frame to notify the client device that the AP 202 is to be available for communication at the first capability mode following the transition delay.

The AP 202 can monitor, manage, or otherwise identify a data transmission rate and latency sensitivity of the client device while operating in the second capability mode. The data transmission rate (e.g., bandwidth) can correspond to the amount of data that can be transmitted over a network over a time period. The data transmission rate can be measured in kilobits per second (kbps), megabits per second (Mbps), gigabits per second (Gbps), among others. Higher data transmission rates can enable faster data transfer for applications requiring large amounts of data to be sent quickly. The latency sensitivity can correspond to an impact that delays of data transmission has on a client device. High latency can correspond to buffering, poor user experience, and reduce efficiency.

The AP 202 can transition, modify, or otherwise configure the AP 202 from the second capability mode to the first capability mode responsive to at least one of the data transmission rate exceeding a data transmission rate threshold for the second capability or the latency exceeding a latency threshold for the second capability. The data transmission rate threshold can be a value or indication that corresponds to optimal data transfer between the client device and the AP. In this manner, the AP can resolve the issues assisted with high latency and low data transmission rate. The AP 202 can communicate subsequent to the transmission of the frame, with the client device at the second capability mode.

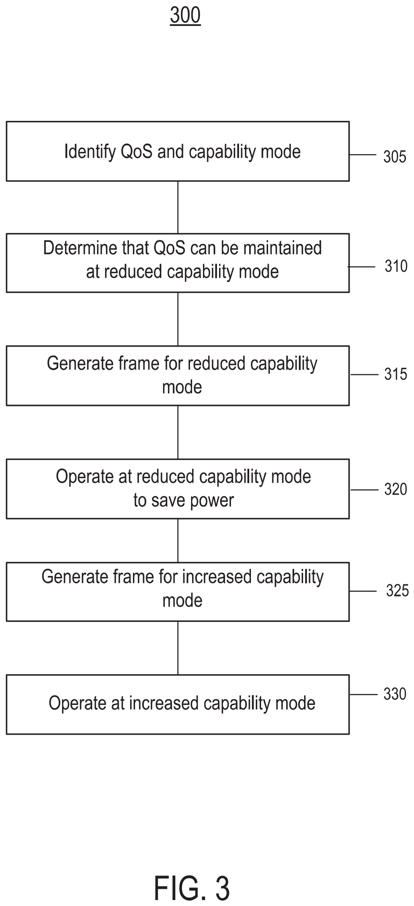

Referring now to FIG. 3, depicted is an example method 300 of access point semi-static power is illustrated. The method 300 can be implemented, for example, using one or more processors of a computing system configured via instructions and data stored in memory, to implement the semi-static power save state among the participating devices (e.g., APs 202). The method 300 can be implemented, using for example, system 100, system 200, or any of the features discussed in connection with FIGS. 1A-2. The method 300 can include acts or steps 305-330. In a brief overview, at act 305 the method can identify a quality of service (QoS) and a capability mode. At 310, the method can determine that the QoS can be maintained at a reduced capability mode. At 315, the method can generate frame for reduced capability mode. At 320, the method can operate at reduced capability mode. At 325, the method can generate frame for increased capability mode. At 330, the method can operate at increased capability mode.

At act 305, the AP can identify a QoS and capability mode. The AP is configured to broadcast to a plurality of client devices comprising the client device one or more parameters for a plurality of capability modes that include the increased capability mode and the reduced capability mode. The one or more parameters can correspond to at least one of a data transmission rate, a bandwidth or a number of spatial streams for each capability mode of the plurality of capability modes.

An AP in power save state can be expected to operate at a lower capability mode with reduced Rx/Tx capabilities. There can optionally be multiple intermediate lower capability modes, each mapping to a different power state at the AP. Some examples of lower capability modes can include A mode where the AP can be able to receive only non-HT duplicate PPDUs in 20MHz bandwidth, 1 NSS and at 6/12/24 Mbps (i.e. the mandatory non-HT rates). If there are both UHR and pre-UHR client devices and where the maximum operating bandwidth of the pre-UHR client devices can be 80MHz, the AP can operate in a lower capability mode where it only supports 80MHz PPDUs. In general, the choice of the lower capability mode may depend on the power save requirements at the AP, the capabilities of the associated client devices, the QoS requirements of the traffic, etc.

An ultra-high reliability (UHR) client device (e.g., client device) that knows that the AP can be in power save state, can transmit an ICF to the AP, wait for an ICR after SIFS and then initiate normal PPDU exchanges with the AP. However, unlike the client device, power save at an AP can be introduced in a calibrated manner. For this reason, the usual ICF - ICR exchange can be not preferred for AP power save, as it may require considerable padding in the ICF and lead to loss of medium efficiency. Hence, the AP power save can be semi-statically enabled or semi-statically disabled to reduce loss of efficiently and reduce padding.

At 310, the AP can determine that the QoS can be maintained at a reduced capability mode. The AP can determine that the AP can be capable of communicating with the client device according to the QoS at a plurality of capability modes comprising the reduced capability mode. Each capability level of the plurality of capability levels associated with a respective power level of a plurality of power levels, each of the plurality of power levels lower than the increased power level. The AP can identify an amount of network traffic for a plurality of client devices associated with the AP, the plurality of client devices comprising the client device. The AP can select, based on network traffic status, from the plurality of capability modes, the reduced capability mode.

The AP can determine that the AP can be capable of communicating with the client device according to the QoS at the reduced capability mode in response to a number of client devices associated with the AP and an amount of network traffic associated with the client devices comprising the client device. The AP can select the reduced capability mode from a plurality of capability modes, based on the number of client device and the amount of network traffic.

The transition of an AP from its higher capability state to a lower capability state can be initiated by the AP. The choice of the lower capability state and the time of switching to the lower capability state depends for example, on the AP's judgement on the amount and QoS requirements of pending DL/UL traffic, number of associated client devices that have traffic and the client devices' capabilities. In this manner, the AP can transition from a higher power state to a lower power state.

At 315, the AP can generate a frame for the reduced capability mode, responsive to the AP determining to transition from a higher power state to a lower power state. The AP can generate the frame to indicate to the client device, a time duration for which the AP can communicate at the reduced capability level. The AP can receive, from the client device, an indication that the QoS can be satisfied at the reduced capability mode responsive to a status of the AP to save energy.

The AP can transmit the frame responsive to the indication. The AP can transmit the frame to indicate to the client device a time duration for which the AP is to communicate at the reduced capability mode. The AP can identify at least one of updated traffic conditions at the client device or updated QoS of the client device. The AP can adjust the time duration based on at least one of the updated traffic conditions or the updated QoS. The AP can perform Dynamic Frequency Selection (DFS) detection prior to transmitting the frame. The AP can transmit the frame to notify the client device, responsive to the DFS detection.

The AP can transmit a broadcast frame to notify the client devices, such as a Power Save Enable Notification (PSEN) frame. The PSEN frame can include information on at least the lower capability mode that the AP is transitioning to and if known, the time of next scheduled switch to a higher capability mode. The information could be in the form of a mode identifier.

It is understood by the client devices that the time until the AP can be able to receive PPDUs is equal to or lower than the format/rate/bandwidth that corresponds to the indicated lower capability mode.

The PSEN frame may contain an intermediate capability mode higher than the lowest non-HT duplicate 1NSS 20MHz low MCS mode, if the AP supports such a mode in its power save state. However, if the AP becomes incapable of exchanging frames during this transition, a transition delay can be indicated during which the AP will be unavailable, especially if the transition delay is significant.

For UHR client devices, such transition delay can be indicated in the PSEN frame. The AP can also inform pre-UHR client devices (e.g., at least HE/EHT client devices) of such unavailability using the existing framework of aperiodic Broadcast TWT can be used (with TWT required and responder PM =1), Quiet interval configuration, or CTS-A .

After a UHR client device receives the PSEN frame from its AP, the client device can initiate any frame exchanges with the AP in compliance with the indicated lower capability state and if a transition delay is indicated, after such an indicated transition delay.

At 320, the AP can operate at the reduced capability mode to save power and communicate with the client device at the reduced capability mode. The AP can monitor data a transmission rate and a latency sensitivity of the client device while operating in the reduced capability mode. The AP can transition the AP from the reduced capability mode to the increased capability mode, responsive to at least one of the data transmission rate exceeding a data transmission rate threshold for the reduced capability or the latency exceeding a latency threshold for the reduced capability. The AP can operate at the reduced capability mode, for instance, in response to determining that QoS for the client device with which the AP is operating at the reduced capability mode can be satisfied or met at that reduced capability mode. At some point, for example, the AP can determine that the AP is to transition from the reduced capability mode to the increased capability mode. For instance, the AP can determine that the QoS for the client device can no longer be met at the reduced capability mode, and in response to this determination, the AP can determine to continue operating at a higher capability mode.

At 325, the AP can generate a frame for a shift or resumption of operation at an increased capability mode. For instance, the AP can generate a PSDN frame to the client device to notify the recipient client device that the AP is to continue operating at a different (e.g., higher) capability mode, notifying the client device of the performance characteristics at the higher mode (e.g., bandwidth and other parameters. In some cases, the AP can transmit, responsive to a determination that the AP is not capable of communicating with the client device according to the QoS at the reduced capability mode, a frame to notify the client device that the AP is to transition from the reduced capability mode to the increased capability mode. The AP can generate, responsive to the determination that the AP is to transition from the reduced capability mode to the increased capability mode, a reduced frame to notify the client device of a transition delay during which the AP will be unavailable. The AP can transmit the reduced frame to notify the client device that the AP is to be available for communication at the increased capability mode following the transition delay.

The transition of an AP from its lower capability state to a higher capability state is initiated by the AP. The transition can be triggered by AP or by a request from a client device. A client device can transmit indications to the AP in the PPDU format that the AP supports in the APs current power save state. The client device can transmit the indication when the client devices knows that the AP may be in power save state which may not support the format/rate/bandwidth of the data it intends to transmit.

The indication may be a part of regular data/BSR and may contain the QoS ID of the highest priority data pending at the client device. The AP can transmit a regular acknowledgement which indicates to the client device that the AP has received the information.

The AP can determine to transition out of its power save state may be based for example, on the QoS requirements of the DL traffic buffered at the AP, or those of the UL traffic indicated by the client device, the time until the AP's next scheduled wakeup etc.

In some instances, the AP can determine to remain in power save state, until its next scheduled wake-up time. If the AP decides to transition out of its power save state, the AP can transmit a Power Save Disable Notification (PSDN) frame as a broadcast frame. The PSDN frame can indicate a transition delay if the AP cannot to receive any frames while transitioning to the higher power state.

Any client device which receives the PSDN frame can begin frame exchanges, after the indicated transition delay has elapsed from the end of the PSDN frame. To increase robustness, the AP may repeat the PSDN information in successive beacons. For any such subsequent transmission of the PSDN, a 0 transition delay can be indicated. If the AP determines not to transition out of its power save state, the AP can remain in power save state until the time of its next scheduled wake-up. The AP can indicate the time of its next scheduled wake-up if the time is altered. The information can be repeated in beacons so that it can be used by other client devices to know the next scheduled wake-up time of the AP.

The AP can transmit a PSDN frame without any client device requesting for it. Any client device which receives the PSDN frame can begin frame exchanges after accounting for any indicated transition delay. The PSDN frame can be a broadcast frame and repeated in successive beacons. If there is a non-zero transition delay during which the AP identifies that it is incapable of exchanging frames and if the AP determines to inform pre-UHR client devices (at least HE/EHT client devices) of such unavailability, the AP can use the existing framework of aperiodic Broadcast TWT can be used (with TWT required and responder PM =1), Quiet interval configuration, or CTS-A.

At step 330, the AP can operate at the increased capability mode to communicate with the client device at the increase capability mode. For instance, upon shifting from a pre-UHR mode, the AP and the client devices can communicate at the UHR mode of operation. For instance, the AP and the client devices can operate any of the particular modes consuming a greater amount of power than a prior mode (e.g., at a lower power level) for a predetermined time duration, which can be signaled or indicated to the participating client devices.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A,' only 'B,' as well as both 'A' and 'B.' Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed, and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. An access point, AP, device, comprising:
one or more processors coupled with memory to:
identify that the AP communicates with a client device according to a quality of service, QoS, of the client device at a first capability mode associated with a first power level of the AP;
determine that the AP is capable of communicating with the client device according to the QoS at a second capability mode associated with a second power level of the AP, the second power level lower than the first power level;
transmit, responsive to the determination, a frame to notify the client device that the AP is to transition from the first capability mode to the second capability mode and operate at the second capability mode for at least a scheduled duration of time; and
communicate, subsequent to the transmission of the frame, with the client device at the second capability mode for at least the scheduled duration of time.

2. The AP device of claim 1, comprising the one or more processors to:
determine that the AP is capable of communicating with the client device according to the QoS at a plurality of capability modes comprising the second capability mode, each capability level of the plurality of capability levels associated with a respective power level of a plurality of power levels, each of the plurality of power levels lower than the first power level;
identify an amount of network traffic for a plurality of client devices associated with the AP, the plurality of client devices comprising the client device; and
select, based on network traffic status, from the plurality of capability modes, the second capability mode.

3. The AP of any one of the preceding claims, comprising the one or more processors to:
determine that the client device is configured to operate at the first capability mode at an Ultra-High Reliability, UHR, level of performance and at the second capability mode at a pre-UHR level of performance;
determine that the pre-UHR level of performance is sufficient to satisfy the QoS; and transmit, responsive to determining that the pre-UHR level of performance is sufficient to satisfy the QoS, the frame to notify the client device that the AP is to transition from the second capability mode at the UHR level of performance to the first capability mode at the pre-UHR level of performance.

4. The AP of any one of the preceding claims, comprising the one or more processors to:
receive, from the client device, an indication that the QoS is to be satisfied at the second capability mode responsive to a status of the AP to save energy;
generate the frame comprising the indication to specify the scheduled duration of time for which the AP is to communicate at the second capability level; and
transmit the frame responsive to the indication.

5. The AP of any one of the preceding claims, comprising the one or more processors to:
determine, for each client device of a plurality of client devices comprising the client device, a version of a Wi-Fi configuration including a UHR or a pre-UHR configuration and supported capabilities of the each respective client device, the supported capabilities corresponding to a bandwidth, a modulation and coding scheme, MCS and a number of spatial streams, Nss, of the each respective client device associated with one or more of a plurality of available capability modes associated with a corresponding plurality of power levels of the client device;
determine, from the supported capabilities, that a supported capability of the second capability mode is a maximum capability of the plurality of available capability modes that is sufficient to satisfy the QoS for the plurality of client devices; and
transmit, responsive to determining that the supported capability is the maximum capability that is sufficient to satisfy the QoS for the plurality of client devices, the frame to the client device configured according to the UHR to notify that the AP is to transition from the first capability mode operating at the UHR level of performance to the second capability mode operating at the pre-UHR level of performance.

6. The AP of any one of the preceding claims, comprising the one or more processors to:
transmit, responsive to a determination that the AP is not capable of communicating with the client device according to the QoS at the second capability mode, a second frame to notify the client device that the AP is to transition from the second capability mode to the first capability mode; and
communicate, subsequent to the transmission of the second frame, with the client device at the first capability mode.

7. The AP of any one of the preceding claims, comprising the one or more processors to:
determine that the AP is to transition from the second capability mode to the first capability mode;
generate, responsive to the determination that the AP is to transition from the second capability mode to the first capability mode, a second frame to notify the client device of a transition delay during which the AP will be unavailable; and
transmit the second frame to notify the client device that the AP is to be available for communication at the first capability mode following the transition delay.

8. The AP of any one of the preceding claims, wherein
the first capability mode is associated with at least one of
a first data transmission rate that is higher than a second data transmission rate of the second capability mode,
a first channel width that is wider than a second channel width of the second capability mode or
a first number of spatial streams that is larger than a second number of spatial streams of the second capability mode.

9. The AP of any one of the preceding claims, comprising the one or more processors to:
monitor data transmission rate and latency sensitivity of the client device while operating in the second capability mode; and
transition the AP from the second capability mode to the first capability mode responsive to at least one of the data transmission rate exceeding a data transmission rate threshold for the second capability or the latency exceeding a latency threshold for the second capability.

10. The AP of any one of the preceding claims, comprising the one or more processors to:
perform Dynamic Frequency Selection, DFS, detection prior to transmitting the frame; and
transmit the frame to notify the client device, responsive to the DFS detection.

11. The AP of any one of the preceding claims, wherein the AP is configured to broadcast to a plurality of client devices comprising the client device one or more parameters for a plurality of capability modes comprising the first capability mode and the second capability mode, wherein
the one or more parameters correspond to at least one of a data transmission rate, a bandwidth or a number of spatial streams for each capability mode of the plurality of capability modes.

12. The AP of any one of the preceding claims, comprising the one or more processors to:
transmit the frame to indicate to the client device a time duration for which the AP is to communicate at the second capability mode;
identify at least one of updated traffic conditions at the client device or updated QoS of the client device; and
adjust the time duration based on at least one of the updated traffic conditions or the updated QoS.

13. The AP of any one of the preceding claims, comprising the one or more processors to:
determine that the AP is capable of communicating with the client device according to the QoS at the second capability mode for a time duration corresponding to a period of low network traffic; and
generate a frame to notify the client device that the AP is to transition from the first capability mode to the second capability mode for the time duration.

14. A method, comprising:
identifying, by one or more processors of an access point, AP, that the AP communicates with a client device according to a quality of service, QoS, of the client device at a first capability mode associated with a first power level of the AP;
determining, by the one or more processors, that the AP is capable of communicating with the client device according to the QoS at a second capability mode associated with a second power level of the AP, the second power level lower than the first power level;
transmitting, by the one or more processors responsive to the determination, a frame to notify the client device that the AP is to transition from the first capability mode to the second capability mode and operate at the second capability mode for at least a scheduled duration of time; and
communicating, by the one or more processors subsequent to the transmission of the frame, with the client device at the second capability mode for at least the scheduled duration of time; wherein in particular the method comprises at least one of the following features (A) to (E):
(A)
determining, by the one or more processors, that the AP is capable of communicating with the client device according to the QoS at a plurality of capability modes comprising the second capability mode, each capability level of the plurality of capability levels associated with a respective power level of a plurality of power levels, each of the plurality of power levels lower than the first power level;
identifying, by the one or more processors, an amount of network traffic for a plurality of client devices associated with the AP, the plurality of client devices comprising the client device; and
selecting, by the one or more processors based on network traffic status, from the plurality of capability modes, the second capability mode;
(B)
determining, by the one or more processors, that the AP is capable of communicating with the client device according to the QoS at the second capability mode in response to a number of client devices associated with the AP and an amount of network traffic associated with the client devices comprising the client device; and
selecting, by the one or more processors, the second capability mode from a plurality of capability modes, based on the number of client device and the amount of network traffic;
(C)
determining, by the one or more processors, that the client device is configured to operate at the first capability mode at an Ultra-High Reliability, UHR, level of performance and at the second capability mode at a pre-UHR level of performance;
determining, by the one or more processors, that the pre-UHR level of performance is sufficient to satisfy the QoS; and
transmitting, by the one or more processors, responsive to determining that the pre-UHR level of performance is sufficient to satisfy the QoS, the frame to notify the client device that the AP is to transition from the second capability mode at the UHR level of performance to the first capability mode at the pre-UHR level of performance;
(D)
generating, by the one or more processors, the frame comprising an indication to specify the scheduled duration of time for which the AP is to communicate at the second capability level;
(E)
transmitting, by the one or more processors, responsive to a determination that the AP is not capable of communicating with the client device according to the QoS at the second capability mode, a second frame to notify the client device that the AP is to transition from the second capability mode to the first capability mode; and
communicating, by the one or more processors, subsequent to the transmission of the second frame, with the client device at the first capability mode.

15. A non-transitory computer-readable medium storing instructions that, when executed by at least one processor of an access point, AP, cause the at least one processor to:
identify that the AP communicates with a client device according to a quality of service, QoS, of the client device at a first capability mode associated with a first power level of the AP;
determine that the AP is capable of communicating with the client device according to the QoS at a second capability mode associated with a second power level of the AP, the second power level lower than the first power level;
transmit, responsive to the determination, a frame to notify the client device that the AP is to transition from the first capability mode to the second capability mode and operate at the second capability mode for at least a scheduled duration of time; and
communicate, subsequent to the transmission of the frame, with the client device at the second capability mode for at least the scheduled duration of time.
